# EUROPÄISCHE PATENTANMELDUNG

(11) **EP 4 095 392 A1**
(43) Veröffentlichungstag der Anmeldung: **30.11.2022**
(21) Anmeldenummer: 22171705.1
(22) Anmeldetag: 05.05.2022
(51) Int. Cl.: F15B 1/02, F15B 1/027, F15B 13/02, F15B 13/00, F16H 61/00, F16K 15/18

(54) **HYDRAULISCHE ANORDNUNG FÜR EIN FAHRZEUGGETRIEBE**

(30) Priorität: 25.05.2021 DE 102021113466
(71) Anmelder: Deere & Company, Moline, IL 61265 (US)
(72) Erfinder: Meid, Michael, Mannheim (DE); Billich, Manuel, Mannheim (DE)
(74) Vertreter: Dehnhardt, Florian Christopher

(57) **Zusammenfassung**

Die Erfindung betrifft eine hydraulische Anordnung (12) für ein Fahrzeuggetriebe (14). Diese hydraulische Anordnung (12) enthält eine hydraulische Pumpe (22) zur Bereitstellung eines Systemdruckes (p_sys) innerhalb eines Hydraulikkreislaufes (24) und einen Druckakkumulator (30) zur zeitweiligen Druckversorgung des Hydraulikkreislaufes (24). Zwischen der Pumpe (22) und dem Druckakkumulator (30) ist eine Ventilanordnung (34) zur Aufladung des Druckakkumulators (30) nach Erreichen oder Überschreiten eines vorbestimmten Druck-Schwellenwertes (p_sch) des Systemdruckes (p_sys) ausgehend von einem steigenden Systemdruck (p_sys) hydraulisch angeschlossen.

## Beschreibung

Die Erfindung betrifft eine hydraulische Anordnung für ein Fahrzeuggetriebe mit den Merkmalen des Oberbegriffes des Patentanspruches 1.

Eine derartige hydraulische Anordnung ist aus der DE 10 2019 003 415 A1 bekannt. Diese enthält einen Druckakkumulator zur zeitweiligen bzw. temporären Unterstützung des Hydraulikkreislaufes bei spezifischen Druckerfordernissen, wie etwa einer Kupplungsbetätigung.

Der vorliegenden Erfindung liegt die Aufgabe zugrunde, die hydraulische Stabilität eines Fahrzeuggetriebes weiter zu verbessern.

Diese Aufgabe wird durch eine hydraulische Anordnung mit den Merkmalen des Patentanspruchs 1 gelöst.

Gemäß Patentanspruch 1 weist die hydraulische Anordnung für ein Fahrzeuggetriebe mindestens eine hydraulische Pumpe (insbesondere eine Getriebeöl-Pumpe) zur Bereitstellung eines hydraulischen Systemdruckes innerhalb eines Hydraulikkreislaufes auf, z.B. um eine oder mehrere Kupplungen innerhalb des Fahrzeuggetriebes zu betätigen. Hierbei fördert die hydraulische Pumpe ein Hydraulikmittel (z.B. Öl) innerhalb des Hydraulickreislaufes. Außerdem enthält die hydraulische Anordnung einen hydraulischen Druckakkumulator bzw. Druckspeicher zur zeitweiligen Druckversorgung des Hydraulikkreislaufes. Der Druckakkumulator ermöglicht eine zeitweilige bzw. temporäre Druckversorgung und Unterstützung des Hydraulikkreislaufes. Dabei kann der Druckakkumulator gewissermaßen als Puffer temporär den notwendigen Druck für den Hydraulikkreislauf bereitstellen, wenn die Pumpe keinen ausreichenden Systemdruck liefern kann, z.B. bei großen, kurzfristigen oder schwankenden Volumenstromanforderungen. Dies ist beispielsweise während einer Kupplungsbetätigung oder eines Motorstillstandes der Fall. Zwischen der Pumpe und dem Druckakkumulator ist eine Ventilanordnung hydraulisch angeschlossen. Letztere ist derart ausgebildet, dass diese eine Aufladung des Druckakkumulators bewirkt, sobald bei steigendem Systemdruck ein vorbestimmter Druck-Schwellenwert des Systemdruckes erreicht oder überschritten wird.

Die Ventilanordnung ermöglicht, dass der Druckakkumulator erst dann gezielt hydraulisch aufgeladen wird, wenn der Hydraulickreislauf durch die Pumpe einen stabilisierenden Systemdruck, nämlich den vorbestimmten Druck-Schwellenwert erreicht hat. Hierdurch können Zeitspannen mit einem unerwünscht niedrigen Systemdruck im Hydraulikkreislauf vorteilhaft verkürzt werden und die Funktionalität des Hydraulikkreislaufes bzw. des Fahrzeuggetriebes kann weiter stabilisiert werden.

Ein gezieltes Aufladen des Druckakkumulators bei relativ niedrigem Systemdruck wird folglich vermieden. Dies führt vorteilhaft zu einem höheren Druckanstiegsgradienten in dem Hydraulikkreislauf. Insgesamt ermöglicht die Ventilanordnung eine verbesserte hydraulische Stabilität des Hydraulikkreislaufes bzw. des Fahrzeuggetriebes über unterschiedliche Betriebszustände hinweg. Der stabile Systemdruck optimiert vor allem auch die Kupplungssteuerung (u.a. Kupplungsbetätigung, Kupplungsmodulation, Kupplungsschluss) des Fahrzeuggetriebes.

Wie bereits erwähnt, ermöglicht der vorbestimmte Druck-Schwellenwert zunächst eine Druckstabilisierung des Hydraulikkreislaufes, bevor der Druckakkumulator hydraulisch aufgeladen wird. Hierdurch kann der Druckakkumulator über die Ventilanordnung gezielt schnellaufgeladen werden. Gleichzeitig kann während des gezielten Ladevorganges ein substantieller Druckabfall im Hydraulikkreislauf vermieden werden. Die Schnellaufladung wird vorteilhaft durch den im Hydraulikkreislauf überschüssigen Volumenstrom unterstützt.

Der Druck-Schwellenwert kann abhängig von der Ausführungsform des Hydraulikkreislaufes bzw. des Fahrzeuggetriebes unterschiedlich dimensioniert sein. Beispielsweise hat der Druck-Schwellenwert einen Wert von etwa 90% bis 95% des Regeldruckes des Hydraulikkreislaufes bzw. des Fahrzeuggetriebes.

Weitere vorteilhafte Ausgestaltungen der erfindungsgemäßen hydraulischen Anordnung gehen aus den Unteransprüchen hervor.

In einer bevorzugten Ausführungsform werden die vorbeschriebenen Eigenschaften der Ladefunktion der Ventilanordnung realisiert, indem diese eine Ladeventileinheit aufweist, welche als eine sperrbare hydraulische Verbindung zwischen der Pumpe und dem Druckakkumulator wirkt. Dabei ist die hydraulische Verbindung bei einem Systemdruck unterhalb des vorbestimmten Druck-Schwellenwertes gesperrt. Ausgehend von einem steigenden Systemdruck wird die Sperrung bei bzw. nach Erreichen oder Überschreiten des vorbestimmten Druck-Schwellenwertes aufgehoben. Dies unterstützt einen kompakten Aufbau der Ladeventileinheit und somit auch der gesamten Ventilanordnung.

Für ihre Wirkung als sperrbare hydraulische Verbindung zwischen der Pumpe und dem Druckakkumulator wird die Ladeventileinheit in einer technisch geeigneten Weise angesteuert. Vorzugsweise ist die Ladeventileinheit derart ausgebildet und hydraulisch angeschlossen, dass diese für die hydraulische Sperrung und deren Aufheben vom Systemdruck angesteuert wird. Hierdurch wird eine technisch genaue Funktionalität der Ladeventileinheit unterstützt.

Vorteilhaft wird der Druck-Schwellenwert des Systemdruckes vorbestimmt, indem eine gegen den Systemdruck wirksame Druckfeder der Ladeventileinheit hinsichtlich ihrer Druckkraft entsprechend dimensioniert ist. Dies ermöglicht einen einfachen Aufbau der Ladeventileinheit (z.B. nach Art eines Druckbegrenzungsventils) bei gleichzeitig technisch genauer Arbeitsweise.

Vorzugsweise weist die Ventilanordnung eine Entladeventileinheit mit einer Durchflussrichtung für die zeitweilige bzw. temporäre Druckversorgung des Hydraulikkreislaufes auf. Hierdurch sind in der Ventilanordnung sowohl eine Aufladefunktion als auch eine Entladefunktion des Druckakkumulators integriert. Dies fördert einen hydraulisch einfachen Aufbau der gesamten hydraulischen Anordnung insbesondere in einem Nutzfahrzeug.

Insbesondere weist die Entladeventileinheit ein federdruckbeaufschlagtes Sperrventil (vorzugsweise Rückschlagventil) auf, um die Entladefunktion technisch einfach zu realisieren. Hierbei verläuft die Sperrrichtung des Sperrventils von der Pumpe zum Druckakkumulator.

Vorteilhaft sind die Entladeventileinheit und die Ladeventileinheit hydraulisch parallel geschaltet, wodurch ein kompakter Aufbau der Ventilanordnung unterstützt ist.

Vorzugsweise enthält die Ventilanordnung eine Ausgleichsblende, welche hydraulisch zwischen der Pumpe und dem Druckackumulator geschaltet ist. Hierdurch ist ein Druckausgleich zwischen dem Hydraulikkreislauf und dem Druckakkumulator gewährleistet. Der Druckausgleich kann durch entsprechende Dimensionierung der Ausgleichsblende derart langsam erfolgen, dass die Funktion des Hydraulikkreislaufs wie auch der Entladeventileinheit bzw. der Ladeventileinheit nicht beeinträchtigt wird.

In einer bevorzugten Ausführungsform sind die Wirkrichtung der vorgenannten Druckfeder der Ladeventileinheit und die Wirkrichtung der vorgenannten Druckfeder des Sperrventils parallel (gegensinnig oder gleichsinnig) zueinander ausgerichtet. Dies unterstützt einen raumsparenden Aufbau der Ventilanordnung.

Vorteilhaft sind die beiden vorgenannten Druckfedern in einer koaxialen Relativanordnung positioniert, wodurch die Ventilanordnung hinsichtlich ihres konstruktiv-geometrischen Aufbaus verhältnismäßig einfach gestaltet und entsprechend kostengünstiger hergestellt werden kann.

Die erfindungsgemäße hydraulische Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische, blockschaltbildartige Darstellung von Bestandteilen eines Nutzfahrzeugs mit einer erfindungsgemäßen, eine Ventilanordnung enthaltenden hydraulischen Anordnung,
- Fig. 2: ein Diagramm mit Kennlinien zur Charakterisierung einer Kupplungsbetätigung,
- Fig. 3: die Ventilanordnung gemäß Fig. 1 in einer ersten Ausführungsform,
- Fig. 4: die Ventilanordnung gemäß Fig. 1 in einer weiteren Ausführungsform, und
- Fig. 5: die Ventilanordnung gemäß Fig. 1 in einer weiteren Ausführungsform.

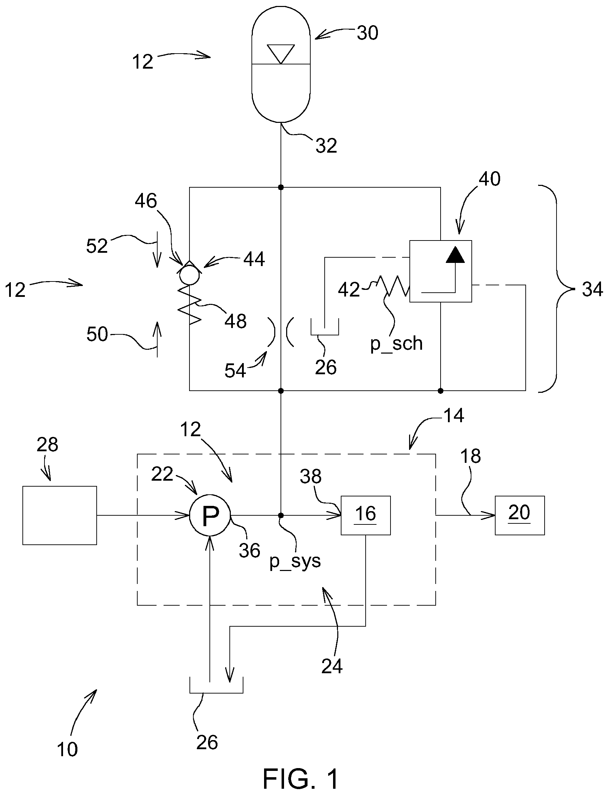

Fig. 1 zeigt schematisch Bestandteile eines landwirtschaftlichen Nutzfahrzeugs 10, insbesondere eines Traktors. Eine hydraulische Anordnung 12 ist teilweise innerhalb und teilweise außerhalb einer Getriebeeinheit 14 für das Nutzfahrzeug 10 angeordnet. Die Getriebeeinheit 14 enthält mindestens eine hydraulisch angesteuerte Kupplung 16. Die Getriebeeinheit 14 ist über eine Getriebeausgangswelle 18 in üblicher Weise mit einem Achsantrieb 20 des Nutzfahrzeugs 10 verbunden.

Die hydraulische Anordnung 12 weist eine hydraulische Pumpe 22 auf, welche einen Systemdruck p_sys zur Ansteuerung der Kupplung 16 bereitstellt. Bei der Pumpe 22 handelt es sich um eine in der Getriebeeinheit 14 angeordnete Getriebeöl-Pumpe. Die hydraulische Anordnung 12 enthält einen Hydraulikkreislauf 24, welcher über ein Ölreservoir bzw. einen Sumpf 26 geschlossen ist. Die Pumpe 22 wird von einem Antriebsmotor 28 des Nutzfahrzeugs 10 angetrieben. Der Antriebsmotor 28 ist beispielsweise ein Verbrennungsmotor des Nutzfahrzeugs 10 oder ein Elektromotor, der z.B. von einer Batterie des Nutzfahrzeugs 10 versorgt werden kann.

Ein weiterer Bestandteil der hydraulischen Anordnung 12 ist ein hydraulischer Druckspeicher bzw. Druckakkumulator 30. Dieser dient der zeitweiligen Druckversorgung des Hydraulikkreislaufes 24, um die Funktion der Pumpe 22 zu unterstützen und/oder temporär zu ersetzen, insbesondere wenn letztere einen Druckabfall aufweist (z.B. bei einer Kupplungsbetätigung) oder inaktiv ist (z.B. aufgrund eines Stillstands des Antriebsmotors 28).

Der Druckakkumulator 30 ist mit einem Hydraulikanschluss 32 an eine Ventilanordnung 34 hydraulisch angeschlossen. Die Ventilanordnung 34 ist zwischen dem Druckakkumulator 30 und der Pumpe 22 hydraulisch zwischengeschaltet.

Bei normalen Betriebsverhältnissen liegt an einem Pumpenausgang 36 der Pumpe 22 und an einem Hydraulikeingang 38 der Kupplung 16 ein Regeldruck p_reg als Systemdruck p_sys an, der abhängig von der Ausführung der Getriebeeinheit 14 z.B. einen Wert von 16 bis 24 bar aufweisen kann.

Die Ventilanordnung 34 enthält eine Ladeventileinheit 40, welche eine Aufladung des Druckakkumulators 30 startet, wenn bei steigendem Systemdruck p_sys ein vorbestimmter Druck-Schwellenwert p_sch erreicht oder überschritten ist. Zu diesem Zweck ist die Ladeventileinheit 40 als eine sperrbare hydraulische Verbindung zwischen der Pumpe 22 und dem Druckakkumulator 30 ausgebildet. Die Ladeventileinheit 40 ist insbesondere nach Art eines Druckbegrenzungsventils ausgestaltet. Die Ladeventileinheit 40 wird vom Systemdruck p_sys angesteuert. Gegen den Systemdruck p_sys arbeitet an der Ladeventileinheit 40 der Federdruck einer Ventildruckfeder 42.

Die Ventildruckfeder 42 ist derart dimensioniert, dass ihr Federdruck dem gewünschten Druck-Schwellenwert p_sch entspricht. Hierdurch ist der Druck-Schwellenwert p_sch vorbestimmt. Im Bereich der Ladeventileinheit 40 bleibt die hydraulische Verbindung zwischen der Pumpe 22 und dem Druckakkumulator 30 bei einem Systemdruck p_sys unterhalb des Druck-Schwellenwertes p_sch gesperrt. Sobald der steigende Systemdruck p_sys den Druck-Schwellenwert p_sch erreicht oder überschreitet, wird die Sperrwirkung der Ladeventileinheit 40 automatisch aufgehoben, und es erfolgt eine schnelle Aufladung des Druckakkumulators 30 über die Ladeventileinheit 40.

Weiterhin weist die Ventilanordnung 34 eine Entladeventileinheit 44 in Form eines Rückschlagventils 46 auf. Eine Druckfeder 48 des Rückschlagventils 46 ist derart wirksam, dass dessen Sperrrichtung 50 von der Pumpe 22 zum Druckakkumulator 30 verläuft. Bei ausreichendem Systemdruck p_sys findet folglich keine Entladung des Druckakkumulators 30 statt. Umgekehrt gewährleistet eine Durchflussrichtung 52 des Rückschlagventils 46 die gewünschte zeitweilige Druckversorgung des Hydraulickreislaufes 24 durch den Druckakkumulator 30.

Wie in Fig. 1 erkennbar, sind die Entladeventileinheit 44 und die Ladeventileinheit 40 innerhalb der Ventilanordnung 34 hydraulisch parallel geschaltet. Außerdem enthält die Ventilanordnung 34 eine hydraulische Ausgleichsblende 54 zwischen der Pumpe 22 und dem Druckakkumulator 30. Diese Ausgleichsblende 54 gewährleistet einen Druckausgleich zwischen dem Hydraulickreislauf 24 und dem Druckakkumulator 30. Der Druckausgleich erfolgt durch entsprechende Dimensionierung der Ausgleichsblende 54 derart langsam, dass die Funktion des Hydraulickreislaufs 24 wie auch der Entladeventileinheit 44 bzw. der Ladeventileinheit 40 nicht beeinträchtigt wird.

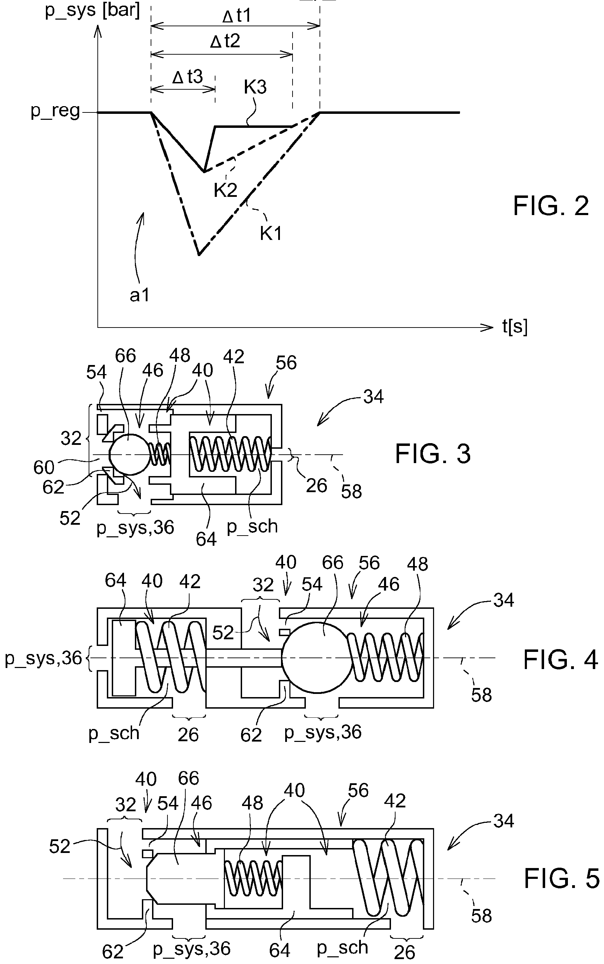

Die Ventilanordnung 34 gemäß Fig. 1 hat eine hydraulische Stabilitätswirkung auf die Getriebeeinheit 14 bzw. auf den Hydraulikkreislauf 24 bei unterschiedlichen Betriebszuständen. In Fig. 2 ist dies anhand einer vergleichenden Betrachtung unterschiedlicher Kennlinien K1, K2, K3 bei einer Kupplungsbetätigung a1 erkennbar. Die strichpunktiert dargestellte Kennlinie K1 repräsentiert eine hydraulische Anordnung 12 ohne Druckackumulator 30. Die unterbrochen dargestellte Kennlinie K2 repräsentiert eine hydraulische Anordnung 12 mit Druckakkumulator 30, jedoch ohne Ventilanordnung 34. Die Kennlinie K3 repräsentiert eine hydraulische Anordnung 12 mit Druckakkumulator 30 und Ventilanordnung 34.

Zeitlich vor der Kupplungsbetätigung a1 haben die hydraulischen Kreisläufe aller drei vorgenannten Ausführungsformen der hydraulischen Anordnung 12 denselben Regeldruck p_reg. Abhängig von dem eingesetzten Getriebe kann der Regeldruck p_reg beispielsweise einen Wert von 16 bis 24 bar haben.

Während der Kupplungsbetätigung a1 sinkt der Systemdruck p_sys im Falle der hydraulischen Anordnung 12 ohne Druckakkumulator 30 stark ab (Kennlinie K1). Dieser starke Druckabfall kann durch Einsatz des Druckakkumulators 30 reduziert werden (Kennlinien K2, K3). Allerdings ist die Zeitspanne bzw. Zeitdauer Δt2 bis zum näherungsweisen Wiedererreichen des Regeldruckes p_reg bei der hydraulischen Anordnung 12 gemäß Kennlinie K2 nur geringfügig geringer als bei der hydraulischen Anordnung 12 gemäß Kennlinie K1 (Zeitdauer Δt1). Erst der Einsatz der Ventilanordnung 34 verkürzt die Zeitdauer bis zum näherungsweisen Wiedererreichen des Regeldruckes p_reg deutlich (Zeitdauer Δt3).

Die Ventilanordnung 34 kann mittels mehrerer separater Ventile und entsprechender Ventilgehäuse oder mittels eines einzigen Gehäuses 56 mit darin integrierten Ventilfunktionen realisiert sein. Die Variante mit einem einzigen Gehäuse 56 ermöglicht einen besonders kompakten Aufbau der Ventilanordnung 34. Fig. 3, Fig. 4 und Fig. 5 zeigen verschiedene Ausführungsformen eines derartigen kompakten Aufbaus der Ventilanordnung 34. Deren Gehäuse 56 ist vorzugsweise zylindrisch ausgebildet. Abhängig von dem gewünschten Volumenstrom (z.B. in Liter pro Minute) kann das Gehäuse 56 beispielsweise eine axiale Länge von etwa 5 cm bis 10 cm aufweisen.

Gemäß Fig. 3 weist das Gehäuse 56 der Ventilanordnung 34 eine Mittellängsachse 58 auf. Über die Ausgleichsblende 54 ist der Hydraulikanschluss 32 des Druckakkumulators 30 mit dem Pumpenausgang 36 ständig hydraulisch verbunden. Die Hauptverbindung zwischen dem Hydraulikanschluss 32 und dem Pumpenausgang 36 ist jedoch bei einem Systemdruck p_sys unterhalb des vorbestimmten Druck-Schwellenwertes p_sch hydraulisch gesperrt. Zu diesem Zweck ist eine Axialöffnung 60 des Gehäuses 56 durch einen daran anliegenden Ventilsitz 62 des Rückschlagventils 46 abgedichtet. Da der Ventilsitz 62 mit einem von der Ventildruckfeder 42 druckbeaufschlagten Schieber 64 fest verbunden ist, bleibt die Axialöffnung 60 solange geschlossen, bis der Systemdruck p_sys die Federkraft der Ventildruckfeder 42, d.h. den vorbestimmten Druck-Schwellenwert p_sch, überwindet. Danach ist die Axialöffnung 60 geöffnet und der Druckackumulator 30 wird über den hydraulischen Weg 36 - 32 schnellaufgeladen. Sinkt der Systemdruck p_sys unterhalb des Druck-Schwellenwertes p_sch, wird die Axialöffnung 60 durch den Ventilsitz 62 automatisch wieder geschlossen. Sinkt der Systemdruck p_sys weiter, kann der Druckakkumulator 30 entlang der Durchflussrichtung 52 zur Unterstützung des Hydraulikkreislaufes 24 automatisch entladen werden, da gegen die Druckfeder 48 des Rückschlagventils 46 keine nennenswerte Druckkraft aufgebracht werden muss. Die Druckfeder 48 ist derart dimensioniert, dass sichergestellt ist, dass ein beispielsgemäß kugelförmiges Sperrelement 66 eine definierte Position auf dem Ventilsitz 62 einnimmt.

Fig. 4 zeigt eine weitere Ausführungsform des Gehäuses 56. Hier ist der Ventilsitz 62 des Rückschlagventils 46 Bestandteil des Gehäuses 56. Sobald ein steigender Systemdruck p_sys den vorbestimmten Druck-Schwellenwert (Ventildruckfeder 42) überwindet, wird der Schieber 64 in Richtung des (hier wiederum beispielsgemäß kugelförmig ausgebildeten) Sperrelementes 66 geschoben und drückt letzteres vom Ventilsitz 62 weg. Infolgedessen kann der Druckakkumulator 30 über den hydraulischen Pfad im Bereich des Ventilsitzes 62 vom Systemdruck p_sys schnellaufgeladen werden. Sinkt der Systemdruck p_sys unterhalb des Druck-Schwellenwertes p_sch, wird der Schieber 64 durch den Federdruck der Ventildruckfeder 42 wieder in seine Ausgangsstellung zurückgeschoben. Somit kann das Sperrelement 66 automatisch wieder seine Sperrstellung am Ventilsitz 62 einnehmen. Sinkt der Systemdruck p_sys weiter, kann der Druckakkumulator 30 entlang der Durchflussrichtung 52 zur Unterstützung des Hydraulikkreislaufes 24 automatisch entladen werden, da gegen die Druckfeder 48 des Rückschlagventils 46 keine nennenswerte Druckkraft aufgebracht werden muss. Die Druckfeder 48 ist lediglich derart dimensioniert, dass das Sperrelement 66 eine definierte Position auf dem Ventilsitz 62 einnimmt.

Fig. 5 zeigt eine weitere Ausführungsform des Gehäuses 56. Hier ist der Ventilsitz 62 des Rückschlagventils 46 wiederum Bestandteil des Gehäuses 56. Sobald ein steigender Systemdruck p_sys den vorbestimmten Druck-Schwellenwert (Ventildruckfeder 42) überwindet, wird der Schieber 64 mitsamt dem (hier etwa zapfenförmig ausgebildeten) Sperrelement 66 axial vom Ventilsitz 62 weggeschoben. Infolgedessen kann der Druckakkumulator 30 über den hydraulischen Pfad im Bereich des Ventilsitzes 62 vom Systemdruck p_sys schnell aufgeladen werden. Sinkt der Systemdruck p_sys unterhalb des Druck-Schwellenwertes p_sch, wird der Schieber 64 durch den Federdruck der Ventildruckfeder 42 wieder in seine Ausgangsstellung zurückgeschoben. Somit kann das Sperrelement 66 automatisch wieder seine Sperrstellung am Ventilsitz 62 einnehmen. Sinkt der Systemdruck p_sys weiter, kann der Druckakkumulator 30 entlang der Durchflussrichtung 52 zur Unterstützung des Hydraulikkreislaufes 24 automatisch entladen werden, da gegen die Druckfeder 48 des Rückschlagventils 46 keine nennenswerte Druckkraft aufgebracht werden muss. Die Druckfeder 48 ist derart dimensioniert, dass sichergestellt ist, dass das Sperrelement 66 eine definierte Position auf dem Ventilsitz 62 einnimmt.

Bei den dargestellten Ausführungsformen der Ventilanordnung 34 sind die Ventildruckfeder 42 und die Druckfeder 48 innerhalb des Gehäuses 56 koaxial zueinander und koaxial zur Mittellängsachse 58 angeordnet. Die Wirkrichtungen der Ventildruckfeder 42 und der Druckfeder 48 verlaufen parallel. Hierdurch werden ein raumsparender Aufbau des Gehäuses 56 und eine effiziente Funktionalität der Ventilanordnung 34 gefördert.

Die Ausgleichsblende 54 kann an unterschiedlichen Positionen angeordnet sein, so etwa an dem Gehäuse 56 und/oder an dem Schieber 64. Alternativ oder zusätzlich kann die Funktion der Ausgleichsblende 54 auch realisiert sein, indem der Ventilsitz 62 eine Nut als eine definierte Undichtigkeit aufweist.

Der Vollständigkeit halber sei erwähnt, dass in den Zeichnungen schematisch dargestellte Details nicht notwendigerweise maßstäblich sind und einzelne Details auch im Verhältnis zueinander nicht notwendigerweise maßstäblich sind. Auch dient die gewählte Darstellung der Komponenten in erster Linie der Erläuterung der Funktion der hydraulischen Anordnung 12, deren tatsächliche Ausbildung kann abweichen.

## Patentansprüche

1. Hydraulische Anordnung (12) für ein Fahrzeuggetriebe (14),
- mit einer hydraulischen Pumpe (22) zur Bereitstellung eines Systemdruckes (p_sys) innerhalb eines Hydraulickreislaufes (24),
- mit einem Druckakkumulator (30) zur zeitweiligen Druckversorgung des Hydraulikkreislaufes (24),
**dadurch gekennzeichnet, dass**
zwischen der Pumpe (22) und dem Druckakkumulator (30) eine Ventilanordnung (34) zur Aufladung des Druckakkumulators (30) nach Erreichen oder Überschreiten eines vorbestimmten Druck-Schwellenwertes (p_sch) des Systemdruckes (p_sys) ausgehend von einem steigenden Systemdruck (p_sys) hydraulisch angeschlossen ist.

2. Hydraulische Anordnung nach Anspruch 1, **dadurch gekennzeichnet, dass** die Ventilanordnung (34) eine Ladeventileinheit (40) aufweist, welche als eine sperrbare hydraulische Verbindung zwischen der Pumpe (22) und dem Druckakkumulator (30) wirkt, wobei
- die hydraulische Verbindung bei einem Systemdruck (p_sys) unterhalb des vorbestimmten Druck-Schwellenwertes (p_sch) gesperrt ist, und
- die Sperrung nach Erreichen oder Überschreiten des vorbestimmten Druck-Schwellenwertes (p_sch) ausgehend von einem steigenden Systemdruck (p_sys) aufgehoben ist.

3. Hydraulische Anordnung nach Anspruch 2, **dadurch gekennzeichnet, dass** die Ladeventileinheit (40) durch den Systemdruck (p_sys) zum Sperren der hydraulischen Verbindung zwischen der Pumpe (22) und dem Druckakkumulator (30) einerseits und zum Aufheben dieser Sperrung andererseits ansteuerbar ist.

4. Hydraulische Anordnung nach wenigstens einem der vorhergehenden Ansprüche, **dadurch gekennzeichnet, dass** der Druck-Schwellenwert (p_sch) des Systemdruckes (p_sys) durch eine gegen den Systemdruck (p_sys) wirksame Druckfeder (42) der Ladeventileinheit (40) vorbestimmt ist.

5. Hydraulische Anordnung nach wenigstens einem der vorhergehenden Ansprüche, **dadurch gekennzeichnet, dass** die Ventilanordnung (34) eine Entladeventileinheit (44) mit einer Durchflussrichtung (52) für die zeitweilige Druckversorgung des Hydraulikkreislaufes (24) aufweist.

6. Hydraulische Anordnung nach Anspruch 5, **dadurch gekennzeichnet, dass** die Entladeventileinheit (44) ein federdruckbeaufschlagtes Sperrventil (46) aufweist, dessen Sperrrichtung (50) von der Pumpe (22) zum Druckakkumulator (30) verläuft.

7. Hydraulische Anordnung nach wenigstens einem der vorhergehenden Ansprüche, **dadurch gekennzeichnet, dass** die Entladeventileinheit (44) und die Ladeventileinheit (40) hydraulisch parallel geschaltet sind.

8. Hydraulische Anordnung nach wenigstens einem der vorhergehenden Ansprüche, **dadurch gekennzeichnet, dass** die Ventilanordnung (34) eine hydraulische Ausgleichsblende (54) zwischen der Pumpe (22) und dem Druckakkumulator (30) aufweist.

9. Hydraulische Anordnung nach wenigstens einem der Ansprüche 4 bis 8, **dadurch gekennzeichnet, dass** die Wirkrichtungen der Druckfeder (42) der Ladeventileinheit (40) und der Druckfeder (48) des Sperrventils (46) parallel verlaufen.

10. Hydraulische Anordnung nach Anspruch 9, **dadurch gekennzeichnet, dass** die Druckfedern (42, 48) koaxial angeordnet sind.
